Europäisches Patentamt

European Patent Office

Office européen des brevets

(19)

(11) Veröffentlichungsnummer: **0 141 906**
**B1**

(12) # EUROPÄISCHE PATENTSCHRIFT

(45) Veröffentlichungstag der Patentschrift :
07.06.89

(21) Anmeldenummer : 84108475.9

(22) Anmeldetag : 18.07.84

(51) Int. Cl.⁴ : **B 60 T   8/78**

(54) **Antiblockierregelsystem.**

(30) Priorität : 27.07.83 DE 3326959

(43) Veröffentlichungstag der Anmeldung :
22.05.85 Patentblatt 85/21

(45) Bekanntmachung des Hinweises auf die Patenterteilung : 07.06.89 Patentblatt 89/23

(84) Benannte Vertragsstaaten :
DE FR GB SE

(56) Entgegenhaltungen :
DE—A— 2 460 904
DE—A— 2 553 000

(73) Patentinhaber : ROBERT BOSCH GMBH
Postfach 50
D-7000 Stuttgart 1 (DE)

(72) Erfinder : Leiber, Heinz
Theodor-Heuss-Strasse 34
D-7141 Oberriexingen (DE)

(74) Vertreter : Kammer, Arno, Dipl.-Ing.
ROBERT BOSCH GmbH Zentralabteilung Patente
Postfach 50
D-7000 Stuttgart 1 (DE)

**Beschreibung**

Die Erfindung betrifft ein Antiblockierregelsystem, enthaltend wenigstens einen Meßwertgeber zur Überwachung wenigstens eines Fahrzeugrads, eine Auswerteschaltung, der die Signale des wenigstens einen Meßwertgebers zugeführt werden und die davon abhängig Ansteuersignale für eine aus Ventilen bestehende oder Ventile enthaltende Bremsdrucksteuereinheit erzeugt, wobei in der Auswerteschaltung auch ein von der Radverzögerung abhängiges Signal erzeugt wird und die Auswerteschaltung solche Ansteuersignale erzeugt, daß der nach einer Druckabsenkung erfolgende Druckaufbau wenigstens zweitweise durch Druckimpulse bewirkt wird.

Ein derartiges Antiblockierregelsystem ist z. B. aus der DE-A-24 60 904 bekannt. Dort wird vorgeschlagen, nach einem Druckabbau zuerst eine Zeit lang mit hohem Druckgradienten Druck aufzubauen und danach mit einem kleineren Druckgradienten, wobei die Dauer des Druckaufbaus mit dem großen Gradienten variabel sein soll und von der Dauer der Druckanhebung im vorhergebenden oder den vorhergehenden Regelzyklen abhängig gemacht wird, derart, daß die Dauer der Druckanhebung mit großem Gradienten mit steigendem Maß der Druckabhebung im Zyklus vorher größer gemacht wird.

Gemäß einem Ausführungsbeispiel wird die Druckanhebung mit dem großen Gradienten durch einen länger dauernden Druckimpuls erzeugt, wobei diese Dauer variabel ist. Hieran schliessen sich impulsförmige Steuersignale an, deren Puls-Pause-verhältnis so gewählt ist, daß durch sie ein im Mittel kleinerer Druckgradient entsteht. Die Zahl der bis zum Erreichen einer neuen Blockierneigung benötigten Druckimpulse entweder insgesamt oder an den ersten länger dauernden Impuls anschließend, wird bestimmt und gemäß dieser Zahl wird die Dauer des ersten Druckimpulses des Folgezyklus variiert.

Es wird in dieser DE-A-24 60 904 auch noch vorgeschlagen, im ersten Regelzyklus die Druckaufbaudauer von der Fahrzeugverzögerung abhängig zu machen, wobei mit zunehmender Fahrzeugverzögerung auch die Dauer des Druckaufbaus mit großem Gradienten zunimmt.

Von diesem Stand der Technik geht die Erfindung aus. Durch die durch sie erzielte Verbesserung wird erreicht, daß der Drucküberschuß beim Erreichen der neuen Instabilität des Rads optimiert wird. Dies muß einmal bei einer geringen Druckdifferenz zwischen eingesteuertem und geregeltem Druck garantiert werden, ein Zustand wie er z. B. auftritt, wenn der vom Fahrer eingesteuertem und geregeltem Druck garantiert werden, ein Zustand wie er z. B. auftritt, wenn der vom Fahrer eingesteuerte Druck den Druckwert gerade überschreitet, bei dem die Blockiergrenze liegt. Diese Optimierung soll jedoch auch erreicht werden, wenn diese Druckdifferenz sehr groß ist (z. B. 200 bar) was z. B. auftritt, wenn der vom Fahrer eingesteuerte Druck sehr hoch ist und z.

B. auf Eis der (mittlere) geregelte Druck sehr tief liegt. Die Zeiten $t_p$, in denen Druckimpulse entstehen muß nun so bemessen werden, daß im erstgenannten Fall überhaupt noch eine ausreichende Druckerhöhung (pro Impuls) zustande kommt, aber im zweiten Fall der zur erneuten Blockierneigung führende Druckimpuls keinen zu großen Drucküberschuß liefert. Dies würde zu einer größeren anschließenden Radverzögerung mit den damit verbundenen Radlagerbelastungen und zu einem erhöhten Druckmittelverbrauch und dem damit verbundenen erhöhten Kostenaufwand für die Bereitstellung des unter Druck stehenden Druckmittels (größere Pumpe) führen.

Diese Nachteile vermeidet die Erfindung in dem sie die Dauer der Druckimpulse entsprechend der vorhergehenden Radverzögerung bemißt und damit bei großer Druckdifferenz nur Druckimpulse kleiner Dauer und damti geringer Erhöhung zuläßt, jedoch bei kleiner Druckdifferenz die Druckimpulse ausreichend lang zur Erzielung einer ausreichenden Erhöhung , andauern läßt.

Weitere Vorteile und Weiterbildungen ergeben sich aus der Figurenbeschreibung. In vorteilhafter Weise wird die Erfindung dort angewandt, wo — wie eingangs unter Hinweis auf die DE-A-24 60 904 beschrieben — zuerst eine schnelle Druckerhöhung durch einen Druckimpuls variabler Länge, die von der Zahl der Druckaufbauimpulse des Vorzyklus oder der Vorzyklen abhängig ist, erreicht wird. Hier werden dann nur die anschließenden Druckimpulse in ihrer Dauer gemäß der erfindungsgemäßen Lehre bemessen.

Anhand der Zeichnung wird ein Ausführungsbeispiel der Erfindung erläutert. Es zeigen

Fig. 1 ein Blockschaltbild einer erfindungsgemäß ausgebildeten Drucksteueranlagen, die als solche diskret aufgebaut, aber auch durch einen programmierbaren Computer ($\mu$P) realisiert sein kann.

Fig. 2 verschiedene Diagramme über der Zeit.

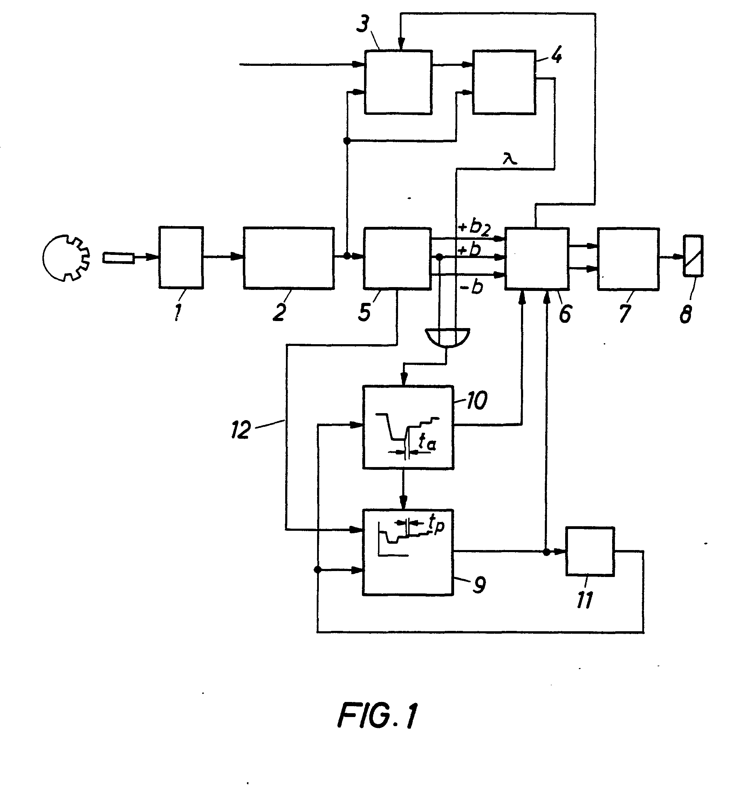

Fig. 1 zeigt das Blockschaltbild eines Antiblockierregelsystems mit Funktionsblöcken, welche weitgehend dem Stand der Technik entsprechen. Das von einem Impulsgeber gelieferte Signal wird in Block 1 in einen Rechteckimpuls umgeformt, der in einen Block 2, in der sich eine Geschwindigkeitsaufbereitung befindet, zu einem radgeschwindigkeitsproportionalen Signal umgewandelt wird, welches in einem Block 3 mit entsprechenden Signalen anderer Räder zur Referenzbildung benutzt wird. In einem Block 4 wird in einen Komparator ein Schlupfsignal gebildet. In einem Block 5 wird das Geschwindigkeitssignal differenziert und in den im Block 5 enthaltenen Komparatoren werden drei typische Regelsignale gebildet, nämlich ein Verzögerungssignal -b, ein erstes Beschleunigungssignal $+b_1$ und ein zweites Beschleunigungssignal $+b_2$. Diese Signale gelangen zu einer Logik 6, welche die für die Regelung notwendigen logischen Prozesse durchführt und die Ansteuersignale für eine stromgeregelten Endstufe 7 eines Magnetventils 8 (Einlaßventil) erzeugt. Die Blöcke 9 und 10 dienen dem Erzeugen der Druckaufbauimpulse. In Block 10 wird die Dauer $t_a$ des Anfangimpulses des Druckaufbaus festgelegt, der bei Abfall des Signals $+b_1$ oder eines Lambda-Signals freigegeben wird, hier allerdiengs erst ab dem zweiten Zyklus. Dieses Signal wird wiederum der Logik 6 zugeführt. Das Aus-gangssignal des Blocks 10 wird mit Hilfe eines Zählers 11, welcher die Anzahl der Druckimpulse mit der Dauer $t_p$ zählt, und ein Signal in den Block 10 liefert, in seiner den ersten Druckimpulsen bestimmenden Länge $t_a$ korrigiert. In Block 10 wird die Länge $t_p$ der folgenden Druckimpulse festgelegt. Die Korrektur darf jedoch erst erfolgen, wenn in vorausgegangenen Regelzyklus über die Anzahl der Pulsstufen festgestellt wurde, ob die Dauer $t_a$ im optimalen Bereich liegt oder entsprechend korrigiert wurde. Daraufhin kann die Korrektur von $t_p$ in Abhängigkeit von der negativen Radbeschleunigung (Leitung 12) in der oben beschriebenen Weise erfolgen. Eine Korrektur in Richtung größere Steuerzeiten $t_p$ erfolgt, wenn der Zähler in Block 11 eine zu große Anzahl von Druckimpulsen bis zum Erreichen der Blockierneigung feststellt.

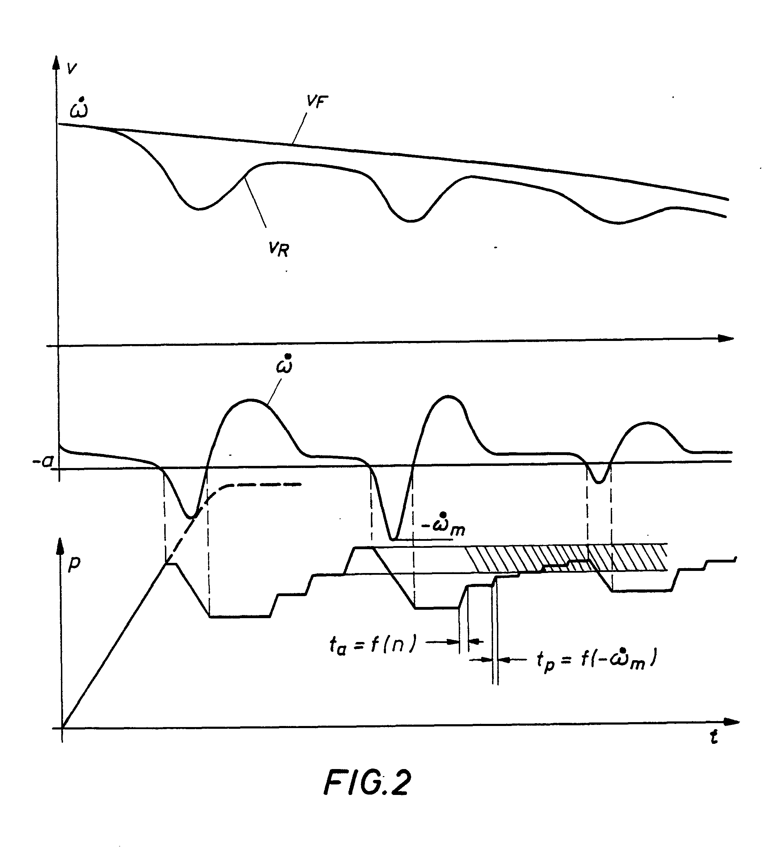

Fig. 2 zeigt den zeitlichen Verlauf einzelner Regelzyklen bei der erfindungsgemäß optimierten Pulsstufenregelung. In der oberen Bildhälfte ist der zeitliche Verlauf der Rad- ($V_R$) und Fahrzeuggeschwindigkeit ($V_F$) dargestellt. Im mittleren Teil ist der zeitliche Verlauf der Radwinkelbeschleunigung $\omega$ dargestellt und in der unteren Bildhälfte der Druckverlauf P.

Nach einem Druckaufbau stellt sich der erste Regelzyklus ein, welcher in bekannter Weise nach der Druckhaltefunktion zum Druckabbau führt mit anschließend getakteten Druckaufbau mit festen Zeiten. Im zweiten Regelzyklus wird der Druckaufbau durch unterschiedliche Steuerzeiten $t_a$ und $t_p$ bestimmt. Die Länge des ersten Impulses ist eine Funktion der Anzahl n der Druckaufbauimpulse im vorhergehenden Regelzyklus.

Dagegen wird nun die Dauer $t_p$ der Druckimpulse in Funktion der negativen Radwinkelbeschleunigung geändert, d. h., die Dauer wird gegenüber dem ersten Zyklus kleiner gewählt. Im Verlauf der Regelung kann nun durch eine reduzierte Druckdifferenz, z. B. weil der Fahrer die Kraft am Bremspedal reduziert, die Dauer $t_p$ klein sein. Dies hätte zur Folge, daß eine sehr große Anzahl von Pulsschritten notwendig ist, um Instabilität zu erreichen. In diesem Fall wird die Dauer $t_p$ im anschließenden Regelzyklus durch den Einfluß des Zählers 11 wiederum vergrößert.

## Patentansprüche

1. Antiblockierregelsystem enthaltend wenigstens einen Meßwertgeber zur Überwachung wenigstens eines Fahrzeugrads, eine Auswerteschaltung, der die Signale des wenigstens einen Meßwertgebers zugeführt werden und die davon abhängig Ansteuersignale für eine aus Ventilen (8) bestehende oder Ventile enthaltende Bremsdrucksteuereinheit erzeugt, wobei in der Auswerteschaltung auch ein von der Radverzögerung abhängiges Signals erzeugt wird und die Auswerteschaltung solche Ansteuersignale erzeugt, daß der nach einer Druckabsenkung erfolgende Druckaufbau wenigstens zeitweise durch Druckimpulse vor sich geht, dadurch gekennzeichnet, daß die Zeiträume ($t_p$) der den Druckaufbau bewirkenden Ansteuersignale eine Funktion der beim vorherigen Druckabbau herrschenden Radverzögerung ($t_p = f(\omega)$) sind, wobei mit größer werdender Radverzögerung (w) die den Druckaufbau bewirkenden ansteuersignale kürzer bemessen werden.

2. Antiblockierregelsystem nach Anspruch 1, dadurch gekennzeichnet, daß nur die Zeiträume ($t_p$) der auf den ersten Druckimpuls folgenden Druckimpulse nach Maßgabe der Funktion $t_p = f(\omega)$ bemessen sind.

3. Antiblockierregelsystem nach Anspruch 2, dadurch gekennzeichnet, daß der den ersten Druckimpuls bestimmende Zeitraum $t_a$ eine Funktion der Zahl der Druckstufen im Vorhergehenden Regelzyklus ($t_a = fn$) bis zum Erreichen einer neuen Blockierneigung ist.

4. Antiblockierregelsystem nach einem der Ansprüche 1 bis 3, dadurch gekennzeichnet, daß Schaltmittel (11) zur Bestimmung der Zahl der die Druckstufen bestimmenden Ansteuersignale bis zum Erreichen einer neuen Blockierneigung vorgesehen sind und daß diese Zeiträume $t_p$ beeinflussende Schaltmittel vorgesehen sind, die in Abhängigkeit von der Höhe dieser Zahl die Zeiträume $t_p$ verlängern.

5. Antiblockierregelsystem nach Anspruch 3 und 4, dadurch gekennzeichnet, daß die Schaltmittel (11) sowohl für die Bemessung des Zeitraum $t_a$ als auch der Zeiträume $t_p$ dienen.

## Claims

1. Anti-blocking regulation system, including at least one measuring transducer for monitoring at least one vehicle wheel, an evaluation circuit, to which the signals of a least one measuring transducer are fed and which, dependently thereon, generates triggering signals for a brake-pressure control unit consisting of valves (8) or including valves, a signal dependent on the wheel deceleration also being generated in the evaluation circuit and the evaluation circuit generating such triggering signals that the pressure build-up taking place after a pressure reduction takes place by pressure pulses, characterized in that the periods ($t_p$) of the triggering signals effecting the pressure build-up are a function of the wheel deceleration prevailing in the previous pressure build- up ($t_p = f(\omega)$), the triggering signals effecting the pressure build-up being made shorter with increasing wheel deceleration ($\omega$).

2. Anti-blocking regulation system according to Claim 1, characterized in that only the periods ($t_p$) of the pressure pulses following the first pressure pulse are dimensioned according to the function $t_p = f(\omega)$.

3. Anti-blocking regulation system according to Claim 2, characterized in that the period $t_a$ determining the first pressure pulse is a function of the number of pressure stages in the previous control cycle ($t_a = fn$) until reaching a new tendency to block.

4. Anti-blocking regulation system according to one of Claims 1 to 3, characterized in that switching means (11) for determining the number of triggering signals determining the pressure stages until reaching a new tendency to block are provided and in that switching means influencing these periods $t_p$ are provided, which prolong the periods $t_p$ in dependence on the level of this number.

5. Anti-blocking regulation system according to Claims 3 and 4, characterized in that the switching means (11) serve both for the dimensioning of the period $t_a$ and also of the periods $t_p$.

**Revendications**

1. Dispositif de régulation de système antiblocage comprenant au moins un capteur de mesure pour surveiller au moins une roue d'un véhicule automobile, un transformateur de mesure auquel sont transmis les signaux d'au moins un capteur de mesure et qui produit à partir de là des signaux de commande dépendants pour un bloc de commande de freins contenant une des soupapes (8) ou des soupapes, où un signal dépendant du ralentissement de la roue est produit aussi dans le transformateur de mesure et ce dernier engendre de tels signaux de commande de façon à ce que l'établissement de la pression se produisant après une chute de pression se réalise auparavant au moins de façon intermittente par des impulsions de pression, caractérisé en ce que les laps de temps $t_p$ des signaux de commande agissant sur l'établissement de la pression sont une fonction du ralentissement de la roue ($t_p = f(\omega)$ régnant lors du précédent établissement de la pression, où, pour un ralentissement de la roue ($\omega$) devenant plus grand, on raccourcit les signaux de commande agissant sur l'établissement de la pression.

2. Dispositif de régulation de système antiblocage selon la revendication 1, caractérisé en ce que seuls les laps de temps $t_p$ de l'impulsion de pression suivant la première impulsion de pression sont déterminés par la valeur de la fonction $t_p = f(\omega)$.

3. Dispositif de régulation de système antiblocage selon la revendication 2, caractérisé en ce que le premier laps de temps $t_a$ déterminant la première impulsion de pression est une fonction du nombre d'étages de pression dans le cycle de régulation antérieur ($t_a = fn$) jusqu'à obtention d'une nouvelle tendance au blocage.

4. Blocage de régulation d'un système antiblocage selon l'une des revendications 1 à 3, caractérisé en ce que le dispositif de commutation (11) pour la détermination des signaux de commande déterminant les étapes de pression jusqu'à obtention d'une nouvelle tendance au blocage sont prévus et que les dispositifs de commutation agissant sur ces laps de temps $t_p$ sont prévus, qui prolongent les laps de temps $t_p$ en fonction du niveau de ce nombre.

5. Dispositif de régulation d'un système antiblocage selon les revendications 3 et 4, caractérisé en ce que le dispositif de commutation (11) aussi bien que la durée du laps de temps $t_a$ servent aussi au laps de temps $t_p$.

FIG.1

FIG.2